# EUROPEAN PATENT APPLICATION

(11) **EP 4 582 165 A1**
(43) Date of publication of application: **09.07.2025**
(21) Application number: 23860328.6
(22) Date of filing: 29.08.2023
(51) Int. Cl.: B01D 53/04, C01B 32/50, B01J 20/22

(54) **ACID GAS COLLECTION METHOD**

(30) Priority: 01.09.2022 JP 2022139537
(71) Applicant: NGK Insulators, Ltd., Nagoya-shi, Aichi 467-8530 (JP)
(72) Inventor: ANDO Junichi, Nagoya-shi, Aichi 467-8530 (JP); TAKAHASHI Michio, Nagoya-shi, Aichi 467-8530 (JP); OKUMA Yusuke, Nagoya-shi, Aichi 467-8530 (JP); KAN Hirofumi, Nagoya-shi, Aichi 467-8530 (JP); SHIBAGAKI Yukinari, Nagoya-shi, Aichi 467-8530 (JP)
(74) Representative: MERH-IP Matias Erny Reichl Hoffmann Patentanwälte PartG mbB
(86) International application number: PCT/JP2023/031179
(87) International publication number: WO 2024/048566

(57) **Abstract**

Provided is a method of capturing an acid gas, which enables suppression of oxidation deterioration of an acid gas adsorption material and wear thereof due to volatilization. A method of capturing an acid gas according to an embodiment of the present invention includes: an adsorption step; a desorption step; and a cooling step in the stated order. In the adsorption step, an acid gas is caused to be adsorbed to an acid gas adsorption material by supplying a gas to be treated containing the acid gas to an acid gas adsorption device including the acid gas adsorption material. In the desorption step, the acid gas is caused to be desorbed from the acid gas adsorption material by heating the acid gas adsorption device. In the cooling step, the acid gas adsorption device is cooled with a cooling medium having a temperature less than an outside air temperature.

## Description

### Technical Field

The present invention relates to a method of capturing an acid gas.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed a gas separation unit including adsorption material layers filled with pellet-like carbon dioxide adsorption materials (see, for example, Patent Literature 1). In such a gas separation unit, the pellet-like carbon dioxide adsorption materials adsorb CO₂ from a gas fluid passing through the adsorption material layers at a predetermined adsorption temperature, and, when heated to a desorption temperature exceeding the adsorption temperature, desorb the adsorbed CO₂. In the gas separation unit described in Patent Literature 1, when the adsorption of CO₂ is started again after CO₂ is desorbed, the adsorption material layers are cooled with outside air (atmosphere) from the desorption temperature to the adsorption temperature. Thus, it takes long time to cool the adsorption material layers, and hence oxidation deterioration of the carbon dioxide adsorption materials due to oxygen contained in the outside air or wear of the carbon dioxide adsorption materials due to volatilization cannot be sufficiently suppressed in some cases.

### Citation List

### Patent Literature

[PTL 1] WO 2014/170184 A1

### Summary of Invention

### Technical Problem

A primary object of the present invention is to provide a method of capturing an acid gas, which enables suppression of oxidation deterioration of an acid gas adsorption material and wear thereof due to volatilization.

### Solution to Problem

[1] According to an embodiment of the present invention, there is provided a method of capturing an acid gas, including: an adsorption step, a desorption step, and a cooling step in the stated order. In the adsorption step, an acid gas is caused to be adsorbed to an acid gas adsorption material by supplying a gas to be treated containing the acid gas to an acid gas adsorption device including the acid gas adsorption material. In the desorption step, the acid gas is caused to be desorbed from the acid gas adsorption material by heating the acid gas adsorption device. In the cooling step, the acid gas adsorption device is cooled with a cooling medium having a temperature less than an outside air temperature.
[2] In the method of capturing an acid gas according to the above-mentioned item [1], the acid gas may be carbon dioxide.
[3] In the method of capturing an acid gas according to the above-mentioned item [1] or [2], in the cooling step, a cooling gas serving as the cooling medium may be caused to flow through the acid gas adsorption device.
[4] In the method of capturing an acid gas according to any one of the above-mentioned items [1] to [3], a concentration of oxygen in the cooling gas may be lower than a concentration of oxygen in the gas to be treated.
[5] In the method of capturing an acid gas according to any one of the above-mentioned items [1] to [4], a flowing quantity of the cooling gas in the cooling step may be smaller than a flowing quantity of the gas to be treated in the adsorption step.
[6] In the method of capturing an acid gas according to any one of the above-mentioned items [1] to [5], the acid gas adsorption device may include a honeycomb-like base material and an acid gas adsorption layer. The honeycomb-like base material includes a partition wall defining a plurality of cells. The acid gas adsorption layer includes the acid gas adsorption material. The acid gas adsorption layer is formed on a surface of the partition wall.
[7] In the method of capturing an acid gas according to the above-mentioned item [6], in the cooling step, a cooling gas serving as the cooling medium may be caused to flow through the cells.
[8] In the method of capturing an acid gas according to the above-mentioned item [6] or [7], in the cooling step, a liquid refrigerant serving as the cooling medium may be brought into contact with the honeycomb-like base material.
[9] In the method of capturing an acid gas according to any one of the above-mentioned items [1] to [8], in the cooling step, a temperature of the acid gas adsorption device may be monitored so that the cooling medium is supplied to the acid gas adsorption device until the acid gas adsorption device is cooled to a desired cooling temperature.

### Advantageous Effects of Invention

According to the embodiments of the present invention, the method of capturing an acid gas, which enables suppression of oxidation deterioration of an acid gas adsorption material and wear thereof due to volatilization, can be achieved.

### Brief Description of Drawings

FIG. 1 is a schematic configuration view of an acid gas adsorption device related with a method of capturing an acid gas, according to one embodiment of the present invention.
FIG. 2 is a schematic perspective view of an acid gas adsorption device related with the method of capturing an acid gas, according to another embodiment of the present invention.
FIG. 3 is a schematic sectional view of the acid gas adsorption device of FIG. 2.
FIG. 4 is a schematic configuration diagram of an acid gas capture system including the acid gas adsorption device of FIG. 2.
FIG. 5 is a schematic configuration diagram of an acid gas capture system according to another embodiment.

### Description of Embodiments

### A. Overview of Method of Capturing Acid Gas

A method of capturing an acid gas according to one embodiment of the present invention includes an adsorption step, a desorption step, and a cooling step in the stated order. In the method of capturing an acid gas, the adsorption step, the desorption step, and the cooling step are typically repeated in the stated order. In the adsorption step, an acid gas is caused to be adsorbed to an acid gas adsorption material by supplying a gas to be treated containing the acid gas to an acid gas adsorption device including the acid gas adsorption material. In the desorption step, the acid gas is caused to be desorbed from the acid gas adsorption material by heating the acid gas adsorption device. In the cooling step, the acid gas adsorption device is cooled with a cooling medium having a temperature less than an outside air temperature.

At the start of the cooling step, the acid gas adsorption device typically has a relatively high desorption temperature through heating. Under this state, when the acid gas adsorption device is cooled with outside air (atmosphere) to a temperature at which the adsorption step can be performed, the acid gas adsorption material may be oxidized and deteriorated, and a adsorption capacity for the acid gas may be reduced thereby. Thus, it is considered to reduce a time period during which the acid gas adsorption material is exposed to a high temperature by increasing the flow rate of the outside air so as to reduce cooling time of the acid gas adsorption device. In this case, the oxidation deterioration of the acid gas adsorption material can be suppressed. However, there arises a problem of acceleration of wear of the acid gas adsorption material due to volatilization.

Meanwhile, in one embodiment of the present invention, the acid gas adsorption device can be smoothly cooled with a cooling medium having a temperature less than an outside air temperature. Thus, as compared to a case in which the acid gas adsorption device is cooled with the outside air (atmosphere), the operation time period of the cooling step can be shortened without increasing the flow rate of the cooling medium. Thus, the oxidation deterioration of the acid gas adsorption material and the wear thereof due to volatilization can be suppressed. Further, the operation time period of the cooling step can be shortened. Thus, the operation time period of one cycle including the adsorption step, the desorption step, and the cooling step can be shortened.

In the adsorption step, the gas to be treated containing the acid gas is typically supplied to the acid gas adsorption device having a predetermined adsorption temperature so that the acid gas is brought into contact with the acid gas adsorption material. As a result, the acid gas adsorption material adsorbs the acid gas.

Examples of the acid gas contained in the gas to be treated include carbon dioxide (CO₂), hydrogen sulfide, sulfur dioxide, nitrogen dioxide, dimethyl sulfide (DMS), and hydrogen chloride. In one embodiment, the acid gas is carbon dioxide (CO₂), and the gas to be treated is a CO₂-containing gas. The CO₂-containing gas may contain nitrogen in addition to CO₂. The CO₂-containing gas is typically air (atmosphere). A concentration of CO₂ in the CO₂-containing gas is, for example, 100 ppm (on a volume basis) or more and 2 vol% or less.

The temperature of the gas to be treated that is supplied to the acid gas adsorption device is, for example, 0°C or more and 50°C or less, preferably equal to the outside air temperature.

A temperature (adsorption temperature) of the acid gas adsorption device in the adsorption step is, for example, 0°C or more, preferably 10°C or more, and is, for example, 50°C or less, preferably 40°C or less. In one embodiment, the adsorption temperature is equal to the outside air temperature. An operation time period of the adsorption step (adsorption time) is, for example, 15 minutes or more, preferably 30 minutes or more, and is, for example, 3 hours or less, preferably 2 hours or less.

When the adsorption temperature and/or the adsorption time falls within the above-mentioned ranges, the adsorption gas adsorption material can efficiently adsorb the acid gas.

The ratio of the adsorption time to the sum of the operation time periods of the adsorption step, the desorption step, and the cooling step is, for example, 30% or more, preferably 50% or more.

When the ratio of the adsorption time is the above-mentioned lower limit or more, the acid gas adsorption material can efficiently adsorb the acid gas. The upper limit of the ratio of the adsorption time is not limited to any particular value, and is typically 80% or less.

An acid gas capture rate in the adsorption step (=100- (concentration of the acid gas in the gas to be treated having passed through the acid gas adsorption device/concentration of the acid gas in the gas to be treated before being supplied to the acid gas adsorption device×100)) is, for example, 60% or more, preferably 75% or more, more preferably 80% or more, and is, for example, 90% or less.

In the desorption step, the acid gas adsorption device is typically heated to a desorption temperature exceeding the adsorption temperature. More specifically, in the desorption step, after the temperature of the acid gas adsorption device is raised to the adsorption temperature, the acid gas adsorption device is maintained at the desorption temperature for predetermined desorption time.

As a result, the acid gas, which has been adsorbed by the acid gas adsorption material in the adsorption step, is desorbed from the acid gas adsorption material. Thus, the desorbed acid gas can be captured.

In one embodiment, the desorbed gas is supplied to the acid gas adsorption device so that the desorbed acid gas is captured together with the desorbed gas. Examples of the desorbed gas include the atmosphere, carbon dioxide, water vapor, nitrogen, argon, and the gas captured in the desorption step. Those desorbed gases may be used alone or may be used in combination through mixture or sequential use.

The gas captured in the desorption step is sometimes referred to as "captured gas." The desorbed gas is preferably a captured gas that has previously been captured by the acid gas adsorption device. The use of the captured gas as the desorbed gas enables achievement of an increase in concentration of the acid gas in the captured gas. The temperature of the desorbed gas supplied to the acid gas adsorption device is, for example, 60°C or more, preferably 90°C or more, and is, for example, 200°C or less, preferably 160°C or less.

In the desorption step, the acid gas can also be captured without using the desorbed gas. For example, the desorbed acid gas may be sucked and captured by a decompression pump. Further, the desorbed gas and the decompression pump may be used in combination.

The temperature of the acid gas adsorption device in the desorption step (desorption temperature) is, for example, 70°C or more, preferably 80°C or more, and is, for example, 200°C or less, preferably 110°C or less. An operation time period of the desorption step (desorption time for which the acid gas adsorption device is maintained at the desorption temperature) is, for example, 1 minute or more, preferably 5 minutes or more, and is, for example, 1 hour or less, preferably 30 minutes or less. When the desorption temperature and/or the desorption time falls within the above-mentioned ranges, the oxidation deterioration and the volatilization of the acid gas adsorption material can be suppressed.

The ratio of the desorption time to the sum of the operation time periods of the adsorption step, the desorption step, and the cooling step is, for example, 5% or more, preferably 10% or more, and is, for example, 50% or less, preferably 25% or less. When the ratio of the desorption time is the above-mentioned lower limit or more, the acid gas can be sufficiently desorbed from the acid gas adsorption material. When the ratio of the desorption time is the above-mentioned upper limit or less, the ratio of the adsorption time to the operation time period of one cycle including the adsorption step, the desorption step, and the cooling step can be stably ensured.

In the cooling step, the acid gas adsorption device after having undergone the desorption step is typically cooled to a desired cooling temperature with the cooling medium having a temperature less than the outside air temperature. The temperature of the cooling medium to be supplied to the acid gas adsorption device is less than the outside air temperature, and is not limited to any particular temperature as long as the acid gas adsorption device can be cooled to the cooling temperature described later. The temperature of a cooling gas is not limited as long as dew condensation does not occur, and is, for example, the outside air temperature-5°C or less, preferably, the outside air temperature-10°C or less.

Examples of the cooling medium include a cooling gas and a liquid refrigerant. Preferably, the cooling medium is a cooling gas. In one embodiment, in the cooling step, a cooling gas is caused to flow through the acid gas adsorption device.

Examples of the cooling gas include the atmosphere, carbon dioxide, nitrogen, and argon. When the cooling gas is the atmosphere, in the cooling step, the outside air is loaded into the acid gas adsorption device to cool the acid gas adsorption device.

The concentration of oxygen in the cooling gas is preferably lower than the concentration of oxygen in the gas to be treated. The concentration of oxygen in the cooling gas to be supplied to the acid gas adsorption device in the cooling step is, for example, 15 vol% or less, preferably 5 vol% or less, and is, for example, 0 vol% or more. The concentration of oxygen can be measured by, for example, a method described in JIS B7983 with use of an electrochemical measurement device (zirconia type and electrode type). The concentration of oxygen in the gas to be treated that is supplied to the acid gas adsorption device in the adsorption step is, for example, more than 15 vol%, preferably 20 vol% or more, and is, for example, 30 vol% or less.

When the concentration of oxygen in the cooling gas is lower than the concentration of oxygen in the gas to be treated, the volatilization of the adsorption material due to the temperature is unavoidable. However, the deterioration of the acid gas adsorption material can be suppressed, and the acid gas adsorption device can be smoothly cooled.

The cooling gas to be supplied to the acid gas adsorption device may be at normal pressure (1.0×10⁵ PaA (absolute pressure)), or may be pressurized or depressurized. The pressure of the cooling gas is, for example, 2.0×10⁵ PaA (absolute pressure) or less, or, for example, normal pressure (1.0×10⁵ PaA) or less, or, for example, 5.0×10⁴ PaA or less. Meanwhile, the pressure of the cooling gas is, for example, 0.1×10⁴ PaA or more, or, for example, 0.3×10⁵ PaA or more.

In one embodiment, the cooling gas is depressurized to a pressure less than normal pressure. As a result, an oxygen partial pressure in the cooling gas can be reduced to thereby further suppress the oxidation deterioration of the acid gas adsorption material.

The oxygen partial pressure in the cooling gas is, for example, 15 kPa or less, preferably 5 kPa or less, and is, for example, 0 Pa or more. An oxygen partial pressure in the gas to be treated that is to be supplied to the acid gas adsorption device in the adsorption step is, for example, 15 kPa or more, preferably 20 kPa or more, and is, for example, 30 kPa or less.

Further, in the cooling step, the pressure of the cooling gas to be supplied to the acid gas adsorption device may be constant or changed. In one embodiment, in the cooling step, after the depressurized cooling gas is supplied to the acid gas adsorption device, the cooling gas at normal pressure is supplied to the acid gas adsorption device to thereby cool the acid gas adsorption device to a desired cooling temperature.

In one embodiment, the flowing quantity of the cooling gas (flow velocity×cooling time; hereinafter referred to as "cooling-gas flowing quantity") in the cooling step is smaller than the flowing quantity of the gas to be treated in the adsorption step (flow velocity×adsorption time; hereinafter referred to as "gas-to-be-treated flowing quantity"). As a result, the wear of the acid gas adsorption material due to volatilization can be further suppressed.

The ratio of the gas-to-be-treated flowing quantity to the cooling-gas flowing quantity (gas-to-be-treated flowing quantity/cooling-gas flowing quantity) is, for example, 0.1 or more, preferably 1 or more, more preferably 10 or more, and is, for example, 100 or less.

The flow velocity of the cooling gas is, for example, from 0.001 m/s to 20 m/s, preferably from 0.1 m/s to 10 m/s. The flow velocity of a gas can be measured by, for example, a method described in JIS B 7556 with use of an ultrasonic flowmeter or the like. When the flow velocity of the cooling gas falls within the above-mentioned ranges, the operation time period of the cooling step (cooling time) can be shortened. As a result, the operation time period of one cycle including the adsorption step, the desorption step, and the cooling step can be shortened. The flow velocity of the gas to be treated is, for example, from 0.1 m/s to 30 m/s, preferably from 0.5 m/s to 10 m/s.

The cooling temperature is, for example, 0°C or more, preferably 20°C or more, and is, for example, 60°C or less, preferably 50°C or less. When the cooling temperature falls within the above-mentioned ranges, the operation time period of the cooling step (cooling time) can be stably shortened. The cooling time is, for example, 5 minutes or more, preferably 10 minutes or more, and is, for example, 60 minutes or less, preferably 30 minutes or less.

In one embodiment, the cooling temperature (temperature of the acid gas adsorption device at the end of the cooling step) exceeds the adsorption temperature. In this case, the cooling time can be shortened. Further, even when the cooling temperature exceeds the adsorption temperature, the acid gas adsorption device is cooled to the adsorption temperature with the supplied gas to be treated after the adsorption step is started. Thus, the cooling time can be shortened, and the adsorption step can be stably performed.

The ratio of the cooling time to the sum of the operation time periods of the adsorption step, the desorption step, and the cooling step is, for example, 50% or less, preferably 30% or less.

When the ratio of the cooling time is the above-mentioned upper limit or less, the operation time period of one cycle including the adsorption step, the desorption step, and the cooling step can be stably shortened, and, in turn, further improvement of the amount of adsorption of the acid gas per unit time in the cycle can be achieved. The lower limit of the ratio of the cooling time is not limited to any particular value, and is typically 25% or more.

Embodiments of the present invention are described below with reference to the drawings. However, the present invention is not limited to these embodiments.

### B. Acid Gas Adsorption Device (Carbon Dioxide Adsorption Device)

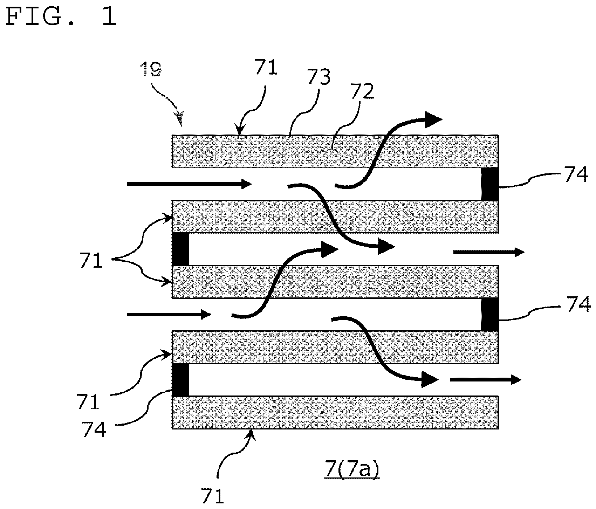

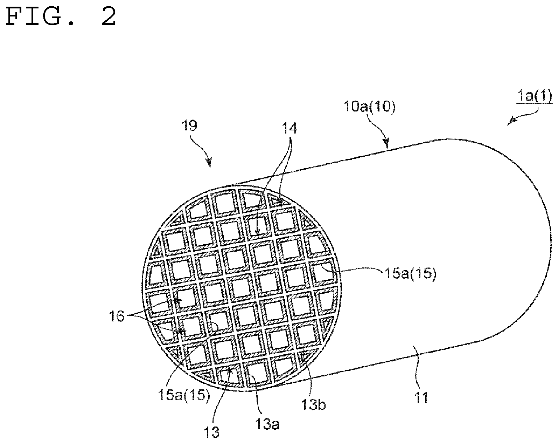

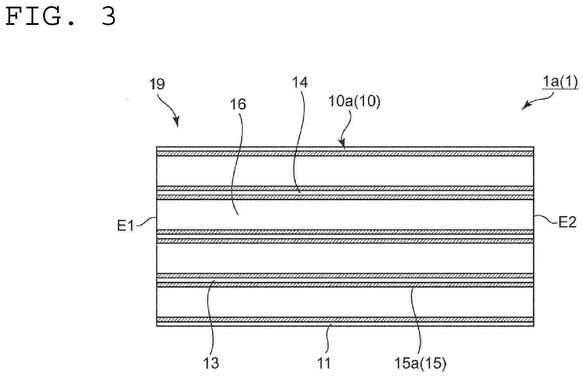

FIG. **1** is a schematic configuration view of an acid gas adsorption device related with the method of capturing an acid gas, according to one embodiment of the present invention. FIG. **2** is a schematic perspective view of an acid gas adsorption device related with the method of capturing an acid gas, according to another embodiment of the present invention. FIG. **3** is a schematic sectional view of the acid gas adsorption device of FIG. **2****.**

### B-1. Acid Gas Adsorption Device of First Embodiment

In one embodiment, as illustrated in FIG. **1****,** an acid gas adsorption device **7** includes a plurality of adsorption material layers **71.** The plurality of adsorption material layers **71** form an acid gas adsorption part **19.** When a gas to be treated by the acid gas adsorption device is a CO₂-containing gas, the acid gas adsorption device **7** is a carbon dioxide adsorption device **7a.**

The plurality of adsorption material layers **71** are stacked in a thickness direction thereof so as to be spaced apart from each other. In the illustrated example, five adsorption material layers **71** are arranged in parallel. However, the number of adsorption material layers **71** is not limited thereto. The number of adsorption material layers **71** is, for example, 5 or more, preferably 10 or more, more preferably 20 or more. A distance between adjacent adsorption material layers **71** among the plurality of adsorption material layers **71** is, for example, 0.5 cm or more and 1.5 cm or less.

Each of the plurality of adsorption material layers **71** includes a flexible fiber member **73** and a plurality of pellet-like adsorption materials **72.**

The flexible fiber member **73** permits passage of a gas to be treated and restricts passage of the pellet-like adsorption materials. The flexible fiber member **73** is typically formed in a hollow shape (bag shape) that allows the plurality of pellet-like adsorption materials **72** to be contained therein. The flexible fiber member **73** may be a fabric or a non-woven fabric. Examples of a material for the flexible fiber member **73** include organic fibers and natural fibers, preferably, a polyethylene terephthalate fiber, a polyethylene fiber, and a cellulosic fiber. A thickness of the flexible fiber member **73** is, for example, 25 µm or more and 500 µm or less.

The plurality of pellet-like adsorption materials **72** are filled in the flexible fiber member **73** having a hollow shape (bag shape). The pellet-like adsorption material **72** serves as an acid gas adsorption material, and typically serves as a carbon dioxide adsorption material. Examples of a material for the pellet-like adsorption material **72** include an amine-modified material, preferably amine-modified cellulose, more preferably amine-modified nanofibrillated cellulose. A mean primary particle diameter of the pellet-like adsorption material **72** is, for example, 60 µm or more and 1,200 µm or less. Any appropriate value may be used as a filling ratio of the pellet-like adsorption materials **72** in the adsorption material layer **71.**

The acid gas adsorption device **7** of the illustrated example further includes a plurality of spacers **74.** The spacer **74** is located between adjacent adsorption material layers **71** among the plurality of adsorption material layers **71.** The plurality of spacers **74** form an acid gas adsorption part **19.** This configuration allows a distance between adjacent adsorption material layers among the adsorption material layers to be stably ensured. In one embodiment, the plurality of adsorption material layers **71** and the plurality of spacers **74** are arranged in a substantially zig-zag pattern when viewed from a direction (depth direction on the drawing sheet of FIG. **1**) orthogonal to the thickness direction of the adsorption material layers **71.**

As the acid gas adsorption device **7** as described above, there is, for example, a gas separation unit as described in WO 2014/170184 A1. The publication is incorporated herein in its entirety by reference.

### B-2. Acid Gas Adsorption Device of Second Embodiment

In another embodiment, as illustrated in FIG. **2** and FIG. **3****,** an acid gas adsorption device **1** includes a base material **10** and acid gas adsorption layers **15.** The base material **10** and the acid gas adsorption layers **15** form an acid gas adsorption part **19.** When a gas to be treated by the acid gas adsorption device is a CO₂-containing gas, the acid gas adsorption device **1** is a carbon dioxide adsorption device **1a**.

The structure of the base material **10** is not particularly limited, and is, for example, a honeycomb-like structure, a filter structure such as a filtration cloth, or a pellet structure. The acid gas adsorption layer **15** is not particularly limited as long as the layer is arranged on the surface of any such base material **10.**

### B-2-1. Base Material (Honeycomb-like Base Material)

In one embodiment, the base material **10** is a honeycomb-like base material **10a.** The honeycomb-like base material **10a** includes partition walls **13** that define a plurality of cells **14.**

The cells **14** each extend from a first end surface **E1** (inflow end surface) of the honeycomb-like base material **10a** to a second end surface **E2** (outflow end surface) thereof in the lengthwise direction (axial direction) of the honeycomb-like base material **10a** (see FIG. **3**). The cells **14** each have any appropriate shape in a cross section in a direction perpendicular to the lengthwise direction of the honeycomb-like base material **10a.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells **14** per unit area) may be appropriately set in accordance with purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material **10a** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **10a** of the illustrated example has a cylindrical shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **10a** typically includes: an outer peripheral wall **11;** and a partition wall **13** positioned inside the outer peripheral wall **11.** In the illustrated example, the outer peripheral wall **11** and the partition wall **13** are integrally formed. The outer peripheral wall **11** and the partition wall **13** may be separate bodies.

The outer peripheral wall **11** has a cylindrical shape. The thickness of the outer peripheral wall **11** may be set to any appropriate thickness. The thickness of the outer peripheral wall **11** is, for example, from 0.1 mm to 10 mm.

The partition wall **13** defines the plurality of cells **14.** More specifically, the partition wall **13** has a first partition wall **13a** and a second partition wall **13b** perpendicular to each other, and the first partition wall **13a** and the second partition wall **13b** define the plurality of cells **14.** The sectional shapes of the cells **14** are each a quadrangle except for a portion in which the first partition wall **13a** and the second partition wall **13b** are each brought into contact with the outer peripheral wall **11.** The configuration of the partition wall is not limited to the partition wall **13** described above. The partition wall may have a first partition wall extending in a radial direction and a second partition wall extending in a circumferential direction, which define a plurality of cells.

The thickness of the partition wall **13** may be appropriately set in accordance with the applications of the honeycomb-like base material. The thickness of the partition wall **13** is typically smaller than the thickness of the outer peripheral wall **11.** The thickness of the partition wall **13** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **13** may be appropriately set in accordance with purposes. The porosity of the partition wall **13** is, for example, 15% or more, preferably 20% or more, and is, for example, 70% or less, preferably 45% or less. The porosity may be measured, for example, by mercury porosimetry.

The bulk density of the partition wall **13** may be appropriately set in accordance with purposes. The density is, for example, 0.10 g/cm³ or more, preferably 0.20 g/cm³ or more, and is, for example, 0.60 g/cm³ or less, preferably 0.50 g/cm³ or less. The bulk density may be measured, for example, by mercury porosimetry.

A material for forming the partition wall **13** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **10a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **10a** is produced. When the firing is adopted, the body is fired at, for example, from 1,200°C to 1,500°C. A firing time period is, for example, 1 hour or more and 20 hours or less.

### B-2-2. Acid Gas Adsorption Layer (Carbon Dioxide Adsorption Layer)

In one embodiment, the acid gas adsorption layer **15** is formed on the surface of the partition wall **13.** In the honeycomb-like base material **10a,** a gas flow passage **16** is formed in a portion (typically, a center portion) in a cross section of the cell **14** in which the acid gas adsorption layer **15** is not formed. The acid gas adsorption layer **15** may be formed on the entire inner surface of the partition wall **13** (specifically, so as to surround the gas flow passage **16**) as in the illustrated example, or may be formed on part of the surface of the partition wall. When the acid gas adsorption layer **15** is formed on the entire inner surface of the partition wall **13,** acid gas (typically, CO₂) removal efficiency can be improved.

The gas flow passage **16** extends from the first end surface **E1** (inflow end surface) to the second end surface **E2** (outflow end surface) as with the cells **14.** Examples of the sectional shape of the gas flow passage **16** include the same sectional shapes as those of the cells **14** described above. Of those, for example, a hexagon or a quadrangle is preferred, and a square, a rectangle, or a hexagon is more preferred. The sectional shapes and sizes of the gas flow passages **16** may be all the same, or may be at least partly different.

Through the cells **14** (more specifically, the gas flow passages **16**), the above-mentioned gas to be treated typically flows in the adsorption step. Further, in one embodiment, through the cells **14** (more specifically, the gas flow passages **16**), the above-mentioned desorbed gas flows in the desorption step, and the above-mentioned cooling gas flows in the cooling step.

The acid gas adsorption layer **15** includes an acid gas adsorption material in accordance with the acid gas to be adsorbed. In one embodiment, the acid gas adsorption layers **15** are carbon dioxide adsorption layers **15a.** The carbon dioxide adsorption layers **15a** include a carbon dioxide adsorption material as an example of the acid gas adsorption material.

Any appropriate compound capable of adsorbing and desorbing CO₂ may be adopted as the carbon dioxide adsorption material. Examples of the carbon dioxide adsorption material include: nitrogen-containing compounds described later; alkali compounds, such as sodium hydroxide and potassium hydroxide; carbonate salts, such as calcium carbonate and potassium carbonate; hydrogen carbonate salts, such as calcium hydrogen carbonate and potassium hydrogen carbonate; metal organic flameworks (MOF), such as MOF-74, MOF-200, and MOF-210; zeolite; activated carbon; nitrogen-doped carbon; and ionic liquids. Those carbon dioxide adsorption materials may be used alone or in combination thereof.

Of the carbon dioxide adsorption materials, a nitrogen-containing compound and an ionic liquid are preferred. More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethylene amine compounds such as tetraethylenepentamine; amino silane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; an organic monomer having a primary amino group to tertiary amino group, such as ethyleneimine and styrene having imparted thereto an amino group; an organic polymer having a primary amino group to tertiary amino group, such as a linear polyethyleneimine and a branched polyethyleneimine having a primary amino group to tertiary amino group; piperazine compounds such as 1-(2-hydroxyethyl) piperazine; amide compounds such as a polyamidoamine; a polyvinylamine; and an organic/inorganic compound having imparted thereto an amino group as a substituent.

Of the nitrogen-containing compounds, methyldiethylamine, monoethanolamine, a cyclic amine, diethanolamine, tetraethylenepentamine, ethyleneimine, a linear polyethyleneimine, a branched polyethyleneimine, and an organic/inorganic compound having imparted thereto an amino group as a substituent are preferred.

The ionic liquid is a "salt" of a liquid formed only of an ion (an anion or a cation), and is in a liquid state under normal temperature and normal pressure (23°C, 0.1 MPaA (absolute pressure)). Examples of the cation of the ionic liquid include: an ammonium-based ion, such as an imidazolium salt or a pyridinium salt; a phosphonium-based ion; a sulfonium salt; and an inorganic ion. Examples of the anion of the ionic liquid include: a halogen-based ion, such as a bromide ion or a triflate ion; a boron-based ion such as a tetraphenylborate ion; a phosphorus-based ion such as a hexafluorophosphate ion; and a sulfur-based ion such as an alkyl sulfonate ion. Of those ionic liquids, for example, a combination of an imidazolium salt serving as a cation and a triflate ion serving as an anion is preferred.

The ionic liquid is used, more preferably, in combination with a carbon dioxide adsorption material other than the ionic liquid (hereinafter referred to as "another carbon dioxide adsorption material"). In this case, the ionic liquid coats another carbon dioxide adsorption material (for example, a nitrogen-containing compound). Thus, an improvement in performance of the carbon dioxide adsorption material and an increase in lifetime thereof can be achieved.

The content ratio of the ionic liquid is, for example, 0.000001 part by mass or more, preferably 0.00001 part by mass or more, and is, for example, 0.1 part by mass or less, preferably 0.05 part by mass or less with respect to 1 part by mass of the other carbon dioxide adsorption material. When the content ratio of the ionic liquid falls within the above-mentioned ranges, an improvement in performance of the carbon dioxide adsorption material and an increase in lifetime thereof can be stably achieved.

In one embodiment, the carbon dioxide adsorption layer 15a further includes a porous carrier in addition to the above-mentioned carbon dioxide adsorption material. In this case, the carbon dioxide adsorption material is typically supported by the porous carrier to face the gas flow passage. When the carbon dioxide adsorption layer includes the porous carrier, the escape of the carbon dioxide adsorption material from the carbon dioxide adsorption layer can be prevented in the adsorption step and/or the desorption step.

The porous carrier may form mesopores in the carbon dioxide adsorption layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), PVDF, activated carbon, zeolite, mesoporous silica, and mesoporous alumina are preferred. Those porous carriers may be used alone or in combination thereof. A material different from that of the carbon dioxide absorption layer is preferably adopted for the porous carrier.

The BET specific surface area of the porous carrier is, for example, 50 m²/g or more, preferably 500 m²/g or more. When the surface area of the porous carrier is equal to or more than the above-mentioned lower limits, the carbon dioxide adsorption material can be stably supported, and hence an increase in CO₂ capture rate can be achieved. The upper limit of the BET specific surface area of the porous carrier is typically 2,000 m²/g or less.

When the carbon dioxide adsorption layer includes the carbon dioxide adsorption material and the porous carrier, the content ratio of the total of the carbon dioxide adsorption material and the porous carrier in the carbon dioxide adsorption layer is, for example, 30 mass% or more, preferably 50 mass% or more, and is, for example, 100 mass% or less, preferably 99 mass% or less.

The content ratio of the carbon dioxide adsorption material in the carbon dioxide adsorption layer is, for example, 30 mass% or more, preferably 50 mass% or more, and is, for example, 99 mass% or less. The content ratio of the porous carrier is, for example, 0.01 part by mass or more, preferably 0.3 part by mass or more, and is, for example, 0.7 part by mass or less, preferably 0.5 part by mass or less with respect to 1 part by mass of the carbon dioxide adsorption material. When the content ratio of the porous carrier falls within the above-mentioned ranges, the carbon dioxide adsorption material can be more stably supported.

Further, the carbon dioxide adsorption layer may be formed only of the carbon dioxide adsorption material. In this case, the carbon dioxide adsorption material is directly supported by the partition wall **13** to face the gas flow passage. When the carbon dioxide adsorption layer is formed only of the carbon dioxide adsorption material, the content ratio of the carbon dioxide adsorption material in the carbon dioxide adsorption layer is typically 95.0 mass% or more and 100 mass% or less. When the content ratio of the carbon dioxide adsorption material falls within the above-mentioned range, an excellent CO₂ capture rate can be stably ensured.

Such a carbon dioxide adsorption layer is typically produced by the following method. A solution of the carbon dioxide adsorption material is prepared by dissolving the above-mentioned acid gas adsorption material in a solvent. Further, the above-mentioned porous carrier is added to the solvent as required. The order of addition of the carbon dioxide adsorption material and the porous carrier is not limited to any particular order. After that, the solution of the carbon dioxide adsorption material is applied onto the base material (specifically, the partition walls), and the coating film is then dried, and is sintered as required. Thus, the carbon dioxide adsorption layer is formed.

Alternatively, a dispersion liquid including the carbon dioxide adsorption material except the ionic liquid and the porous carrier is applied onto the base material, and the coating film is then dried, and is sintered as required. After that, only the ionic liquid is applied to the base material. Thus, the carbon dioxide adsorption layer is formed.

Although not shown, the acid gas adsorption device **1** may include a heating member in addition to the base material **10** and the acid gas adsorption layers **15.** The heating member can heat the base material **10.** The heating member is typically in contact with the base material **10.** When the acid gas adsorption device includes the heating member, the temperature of the acid gas adsorption device can be smoothly raised to the desorption temperature in the desorption step.

Although not shown, the acid gas adsorption device **1** and the acid gas adsorption device **7** may each further include a case. The case has a tubular shape (hollow shape) that allows passage of a fluid, and houses the acid gas adsorption part **19** therein. Examples of the tubular shape include a cylindrical shape and a rectangular tubular shape.

The acid gas adsorption part **19** is typically supported inside the case so as to be immovable relative thereto.

In the cooling step, the entirety of the acid gas adsorption part **19** is typically cooled to the above-mentioned cooling temperature. In one embodiment, the cooling gas passes through the entirety of the acid gas adsorption part **19** that is supported inside the case so as to be immovable relative thereto. When the acid gas adsorption part is supported inside the case so as to be movable relative thereto, a desorption part into which a high-temperature gas flows and a cooling part into which the cooling gas flows are adjacent to each other across a boundary plate. Thus, a region of the cooling part in the vicinity of the boundary plate has cooling efficiency lower than that of a center region of the cooling part due to heat from the desorption part having a high temperature. Thus, the region of the cooling part in the vicinity of the boundary plate is in contact with oxygen under a high-temperature state for a longer period of time, and hence a difference may be generated in oxidation deterioration of the acid gas adsorption material between the center region of the cooling part and the region in the vicinity of the boundary plate. When the acid gas adsorption part is supported inside the case so as to be immovable relative thereto, the cooling part is not adjacent to the desorption part, in which desorption is performed with a high-temperature gas, in the cooling step. As a result, the entirety of the acid gas adsorption part can be uniformly cooled. Accordingly, the oxidation deterioration can be suppressed for the entirety of the gas adsorption part in a uniform manner.

### C. Acid Gas Capture System

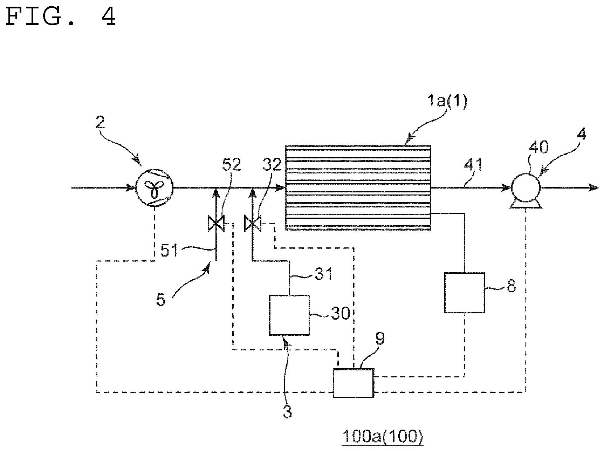

Next, with reference to FIG. **4****,** description is given of an acid gas capture system that enables the above-mentioned method of capturing an acid gas to be performed.

An acid gas capture system **100** of the illustrated example includes an acid gas supply fan **2,** a desorbed gas supply unit **5,** a cooling gas supply unit **3,** a capture unit **4,** a thermometer **8,** and a control part **9** in addition to the acid gas adsorption device. The acid gas capture system **100** of the illustrated example includes one of each of the acid gas adsorption device **1,** the acid gas supply fan **2,** the desorbed gas supply unit **5,** the cooling gas supply unit **3,** the capture unit **4,** the thermometer **8,** and the control part **9.** However, the number of each of those components is not limited to any particular number as long as the number is one or more.

In one embodiment, the acid gas capture system **100** is a carbon dioxide capture system **100a** including the carbon dioxide adsorption device **1a** as an example of the acid gas adsorption device **1.** The acid gas capture system **100** may include the acid gas adsorption device **7** (carbon dioxide adsorption device **7a**) in place of the acid gas adsorption device **1** (carbon dioxide adsorption device **1a**).

### C-1. Acid Gas Supply Fan

The acid gas supply fan **2** is configured to supply the above-mentioned gas to be treated (typically, a CO₂-containing gas) to the acid gas adsorption device **1** (typically, the acid gas adsorption part **19**) in the adsorption step. The acid gas supply fan **2** of the illustrated example can send the gas to be treated containing the acid gas toward the acid gas adsorption device **1.** Any appropriate configuration can be adopted for the acid gas supply fan **2.** The acid gas supply fan **2** and the acid gas adsorption device **1** may be connected to each other through intermediation of a pipe or a part of a container that houses the acid gas adsorption device **1,** which is located on an upstream side of the acid gas adsorption device **1.**

### C-2. Desorbed Gas Supply Unit

The desorbed gas supply unit **5** is configured to supply the above-mentioned desorbed gas to the acid gas adsorption device **1** (typically, the acid gas adsorption part **19**) in the desorption step. The desorbed gas supply unit **5** of the illustrated example includes a desorbed gas supply line **51** and a first on-off valve **52.** The desorbed gas supply line **51** is typically a pipe that allows the supply of the above-mentioned desorbed gas to the acid gas adsorption device **1.** A downstream end portion of the desorbed gas supply line **51** in a direction of supply of the desorbed gas is connected to a part between the acid gas supply fan **2** and the acid gas adsorption device **1.** When the desorbed gas is the above-mentioned captured gas, an upstream end portion of the desorbed gas supply line **51** in the direction of supply of the desorbed gas is connected to an intermediate tank that stores the captured gas, although not shown. The first on-off valve **52** is provided to the desorbed gas supply line **51,** and can open and close the desorbed gas supply line **51.** Examples of the first on-off valve **52** include a ball valve, a gate valve, and a butterfly valve. Preferably, the first on-off valve **52** is a butterfly valve.

### C-3. Cooling Gas Supply Unit

The cooling gas supply unit **3** is configured to supply the above-mentioned cooling gas to the acid gas adsorption device **1** (typically, the acid gas adsorption part **19**) in the cooling step. The cooling gas supply unit **3** of the illustrated example includes a cooling gas device **30,** a cooling gas supply line **31,** and a second on-off valve **32.** The cooling gas device **30** can produce and store the above-mentioned cooling gas. The cooling gas supply line **31** is typically a pipe that allows the supply of the above-mentioned cooling gas from the cooling gas device **30** to the acid gas adsorption device **1.** The second on-off valve **32** is provided to the cooling gas supply line **31,** and can open and close the cooling gas supply line **31.** The second on-off valve **32** is, for example, similar to the first on-off valve **52** described above.

### C-4. Capture Unit

The capture unit **4** is configured to capture the acid gas that has been desorbed in the desorption step. In one embodiment, the capture unit **4** can capture the cooling gas that has passed through the acid gas adsorption device **1** (typically, the acid gas adsorption part **19**) in the cooling step. The capture unit **4** of the illustrated example includes a suction pump **40** and a gas discharge portion **41.** The suction pump **40** can suck the gas inside the acid gas adsorption device. The suction pump **40** is, for example, a vacuum pump. The gas, which is discharged from the acid gas adsorption device **1** and flows toward the suction pump **40,** passes through the gas discharge portion **41.** The gas discharge portion **41** may be a pipe or may be a part of the container that houses the acid gas adsorption device **1,** which is located on a downstream side of the acid gas adsorption device.

### C-5. Thermometer and Control Part

The thermometer **8** can measure the temperature of the acid gas adsorption device **1,** typically the temperature of the acid gas adsorption part **19,** preferably the temperature of the base material **10.** Any appropriate configuration can be adopted for the thermometer **8.** The control part **9** can control the operation of the acid gas capture system **100.** The control part **9** includes, for example, a central processing unit (CPU), a ROM, and a RAM.

### D. Operation of Acid Gas Capture System

Next, description is given of an embodiment of the method of capturing an acid gas, which is performed in the acid gas capture system **100.** In one embodiment, the method of capturing an acid gas includes the above-mentioned adsorption step, a replacement step, the above-mentioned desorption step, and the above-mentioned cooling step in the stated order. Description is given in detail below of a case in which the acid gas adsorption device **1** includes the honeycomb-like base material **10a,** the acid gas adsorption layers **15,** and the heating member (not shown).

In the acid gas capture system **100,** the adsorption step is first performed. In the adsorption step, the control part **9** brings the first on-off valve **52** and the second on-off valve **32** each into a closed state, and drives the acid gas supply fan **2.** As a result, the above-mentioned gas to be treated is sent by the acid gas supply fan **2,** and is supplied to the acid gas adsorption part **19** of the acid gas adsorption device **1** to flow through the gas flow passages **16.** The temperature of the acid gas adsorption device (typically, the temperature of the acid gas adsorption part **19**) in the adsorption step has been adjusted in advance to the above-mentioned adsorption temperature.

In the adsorption step, the ranges of the temperature of the gas to be treated that is to be supplied to the acid gas adsorption device are the same as the above-mentioned ranges of the adsorption temperature. The temperature of the gas to be treated may be the same as or different from the adsorption temperature of the acid gas adsorption device. The pressure of the gas to be treated is, for example, 0.3×10⁵ PaA (absolute pressure) or more and 2.0×10⁵ PaA or less. The relative humidity RH of the gas to be treated is, for example, 10%RH or more and 60%RH or less. The flow velocity of the gas to be treated is, for example, 0.5 m/sec or more and 5 m/sec or less.

Then, after the elapse of the above-mentioned adsorption time, the control part **9** stops the driving of the acid gas supply fan **2** to thereby complete the adsorption step.

Next, in the acid gas capture system **100,** the replacement step is performed. In the replacement step, the control part **9** brings the first on-off valve **52** from the closed state into an open state, and drives the suction pump **40.** Then, the above-mentioned desorbed gas passes through the desorbed gas supply line **51** to be supplied to the acid gas adsorption part **19** of the acid gas adsorption device **1,** and flows through the gas flow passages **16.** As a result, the gas to be treated is replaced by the desorbed gas in the gas flow passages **16.**

In the replacement step, the ranges of the temperature of the desorbed gas to be supplied to the acid gas adsorption device are the same as the above-mentioned ranges of the adsorption temperature. The pressure of the desorbed gas is, for example, from 0.1×10⁴ PaA or more and 1.0×10⁴ PaA or less, or, for example, from 0.1×10⁴ PaA or more and 5.0×10⁴ PaA or less. The operation time period of the replacement step (hereinafter referred to as "replacement time") is, for example, 1 minute or more and 30 minutes or less.

In the replacement step, a purge gas different from the desorbed gas may be introduced into the acid gas adsorption device so that the gas to be treated is replaced by the purge gas in the acid gas adsorption device. In this case, the pressure of the purge gas is, for example, from 0.1×10⁴ PaA or more and 11×10⁴ PaA or less. The replacement time is, for example, 1 minute or more and 30 minutes or less. Examples of the purge gas include water vapor, carbon dioxide, nitrogen, and argon.

After that, the desorption step is performed subsequently to the replacement step in the acid gas capture system **100.** The control part **9** controls the heating member (not shown) to heat the acid gas adsorption device **1** (typically, the acid gas adsorption part **19**) under a state in which the driving of the suction pump **40** is maintained. The heating of the acid gas adsorption device may be started halfway through the replacement step.

When the temperature of the acid gas adsorption device (typically, the temperature of the acid gas adsorption part **19**) reaches the desorption temperature, the acid gas retained in the acid gas adsorption material starts being desorbed (released) from the acid gas adsorption material. The desorbed acid gas is discharged together with the desorbed gas from the acid gas adsorption device **1,** passes through the gas discharge portion **41** and the suction pump **40,** and is then stored in the intermediate tank as required. Such a captured gas is available for various purposes of uses as described above, and may be supplied again to the acid gas adsorption device as the desorbed gas as described above or may be used as a raw material of various kinds of industrial products (for example, a raw material of a hydrocarbon fuel).

Further, in the desorption step, the control part **9** can monitor the temperature of the acid gas adsorption device **1** with use of the thermometer **8** to control an output of the heating member so that the temperature of the acid gas adsorption device **1** (typically, the temperature of the acid gas adsorption part **19**) does not exceed the above-mentioned ranges of the desorption temperature.

Next, after the elapse of the above-mentioned desorption time, the cooling step is performed in the acid gas capture system **100.** The control part **9** first controls the heating member to stop the heating of the acid gas adsorption device **1.** After that, the control part **9** brings the first on-off valve **52** from the open state into the closed state, and brings the second on-off valve **32** from the closed state into the open state, under a state in which the driving of the suction pump **40** is maintained. Then, the above-mentioned cooling gas flows through the cooling gas supply line **31** to be supplied to the acid gas adsorption part **19** of the acid gas adsorption device **1,** and flows through the gas flow passages **16.** As a result, the acid gas adsorption device **1** (typically, the acid gas adsorption part **19**) is cooled.

In the cooling step, the control part **9** monitors the temperature of the acid gas adsorption device **1** with use of the thermometer **8** so as to maintain the supply of the cooling gas, which is an example of the cooling medium, to the acid gas adsorption device **1** until the acid gas adsorption device **1** (typically, the temperature of the acid gas adsorption part **19**) is cooled to a desired cooling temperature.

The cooling gas that has passed through the gas flow passages **16** may be returned to the cooling gas device **30** after passing through the gas discharge portion **41** and the suction pump **40,** and being cooled as required.

After that, when the temperature of the acid gas adsorption device **1** (typically, the temperature of the acid gas adsorption part **19**) reaches the cooling temperature, the adsorption step is performed again subsequently to the cooling step in the acid gas capture system **100.** More specifically, after the control part **9** stops the driving of the suction pump **40,** the above-mentioned adsorption step is performed again. As described above, in the acid gas capture system **100,** the adsorption step, the replacement step, the desorption step, and the cooling step can be repeatedly performed in the stated order.

### E. Modification Example

In the embodiments described above, the cooling gas is supplied as the cooling medium to the acid gas adsorption device in the cooling step. However, as described above, the cooling medium may be a liquid refrigerant. In this case, the liquid refrigerant is brought into contact with the base material **10** (honeycomb-like base material **10a**) to cool the acid gas adsorption device **1** in the cooling step.

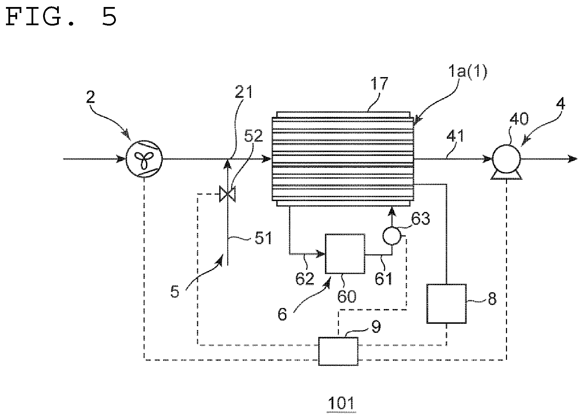

An acid gas capture system **101** including the acid gas adsorption device capable of performing the cooling with the liquid refrigerant is described with reference to FIG. **5****.**

The acid gas capture system **101** has the same configuration as that of the acid gas capture system **100** except that the acid gas adsorption device (the acid gas adsorption device **7** or the acid gas adsorption device **1**) includes a jacket **17,** and the acid gas capture system **101** includes a refrigerant supply unit **6** in place of the cooling gas supply unit **3.** The acid gas capture system **101** of the illustrated example includes the acid gas adsorption device **1** (carbon dioxide adsorption device **1a**), but may include the acid gas adsorption device **7** (carbon dioxide adsorption device **7a**) in place of the acid gas adsorption device **1** (carbon dioxide adsorption device **1a**).

The jacket **17** is provided on an outer surface of the acid gas adsorption device. The jacket **17** of the illustrated example is provided on an outer peripheral surface of the outer peripheral wall **11** (see FIG. **2**) of the acid gas adsorption device **1.** The jacket **17** is configured to allow the liquid refrigerant to flow therein. As a result, the liquid refrigerant can be brought into contact with the outer peripheral wall **11.**

The refrigerant supply unit **6** is configured to allow the liquid refrigerant to circulate through the jacket **17.** The refrigerant supply unit **6** includes a cooler **60,** a refrigerant supply line **61,** a refrigerant circulation line **62,** and a pump **63.**

The cooler **60** can cool the circulating liquid refrigerant to a temperature less than the outside air temperature. Any appropriate configuration may be adopted for the cooler **60.** The refrigerant supply line **61** is typically a pipe that allows the supply of the liquid refrigerant from the cooler **60** to the jacket **17.** An upstream end portion of the refrigerant supply line **61** in a direction of supply of the liquid refrigerant is connected to the cooler **60.** A downstream end portion of the refrigerant supply line **61** in the direction of supply of the liquid refrigerant is connected to the jacket **17.** The refrigerant return line **62** is typically a pipe that allows the liquid refrigerant having passed through the jacket **17** to be returned to the cooler **60.** An upstream end portion of the refrigerant return line **62** in a direction of return of the liquid refrigerant is connected to the jacket **17.** A downstream end portion of the refrigerant return line **62** in the direction of supply of the liquid refrigerant is connected to the cooler **60.** The pump **63** is provided to the refrigerant supply line **61,** and can adjust the flow rate of the liquid refrigerant passing through the refrigerant supply line **61.** The pump **63** may have any appropriate configuration.

The method of capturing an acid gas, which is performed in the acid gas capture system **101,** can be described in the same manner as that for the above-mentioned method of capturing an acid gas, which is performed in the acid gas capture system **100,** except for the cooling step. Thus, description of the adsorption step, the replacement step, and the desorption step is omitted.

In the cooling step, after stopping the heating of the acid gas adsorption device with use of the heating member, the control part **9** starts driving the pump **63.** Then, the liquid refrigerant that has been cooled to a desired temperature in the cooler **60** is supplied to the jacket **17** via the refrigerant supply line **61.** After being brought into contact with the outer peripheral wall **11** of the honeycomb-like base material **10a** inside the jacket **17** to cool the honeycomb-like base material **10a,** the liquid refrigerant is discharged from the jacket **17,** and is returned to the cooler **60** via the refrigerant return line **62.** As a result, the liquid refrigerant circulates through the refrigerant supply unit **6** and the jacket **17** in the cooling step. In the cooling step, the control part **9** monitors the temperature of the acid gas adsorption device **1** with use of the thermometer **8** so as to maintain the circulation of the liquid refrigerant until the acid gas adsorption device **1** is cooled to a desired cooling temperature. Also in this manner, the acid gas adsorption device after having undergone the desorption step can be smoothly cooled to thereby shorten the cooling time.

Meanwhile, when the acid gas capture system **101** illustrated in FIG. **5** and the acid gas capture system **100** illustrated in FIG. **4** are compared to each other, the acid gas capture system **100** can be constructed more easily than the acid gas capture system **101.** Thus, the acid gas capture system **100** is more preferred than the acid gas capture system **101.**

Further, in the cooling step, the cooling gas and the liquid refrigerant may be used in combination as the cooling medium. In this case, the acid gas adsorption device is cooled by supplying thereto the cooling gas and the liquid refrigerant. For example, the acid gas adsorption device **1** is cooled through the flow of the cooling gas through the cells and the contact of the liquid refrigerant with the base material in the cooling step. Further, when the cooling gas and the liquid refrigerant are used in combination, the acid gas capture system is allowed to include the cooling gas supply unit **3** and the refrigerant supply unit **6.**

### Industrial Applicability

The method of capturing an acid gas according to the embodiment of the present invention can be used for separation and capture of an acid gas, and particularly, can be suitably used for a Carbon dioxide Capture, Utilization and Storage (CCUS) cycle.

### Reference Signs List

**1** acid gas adsorption device
**1a** carbon dioxide adsorption device
**7** acid gas adsorption device
**7a** carbon dioxide adsorption device
**10** base material
**10a** honeycomb-like base material
**13** partition wall
**15** acid gas adsorption layer
**15a** carbon dioxide adsorption layer
**100** acid gas capture system
**100a** carbon dioxide capture system

## Claims

1. A method of capturing an acid gas, comprising, in order:
an adsorption step of causing an acid gas to be adsorbed to an acid gas adsorption material by supplying a gas to be treated containing the acid gas to an acid gas adsorption device including the acid gas adsorption material;
a desorption step of causing the acid gas to be desorbed from the acid gas adsorption material by heating the acid gas adsorption device; and
a cooling step of cooling the acid gas adsorption device with a cooling medium having a temperature less than an outside air temperature.

2. The method of capturing an acid gas according to claim 1, wherein the acid gas is carbon dioxide.

3. The method of capturing an acid gas according to claim 1 or 2, wherein, in the cooling step, a cooling gas serving as the cooling medium is caused to flow through the acid gas adsorption device.

4. The method of capturing an acid gas according to claim 3, wherein a concentration of oxygen in the cooling gas is lower than a concentration of oxygen in the gas to be treated.

5. The method of capturing an acid gas according to claim 3, wherein a flowing quantity of the cooling gas in the cooling step is smaller than a flowing quantity of the gas to be treated in the adsorption step.

6. The method of capturing an acid gas according to claim 1 or 2, wherein the acid gas adsorption device comprises:
a honeycomb-like base material including a partition wall defining a plurality of cells; and
an acid gas adsorption layer, which includes the acid gas adsorption material, and is formed on a surface of the partition wall.

7. The method of capturing an acid gas according to claim 6, wherein, in the cooling step, a liquid refrigerant serving as the cooling medium is brought into contact with the honeycomb-like base material.

8. The method of capturing an acid gas according to claim 1 or 2, wherein, in the cooling step, a temperature of the acid gas adsorption device is monitored so that the cooling medium is supplied to the acid gas adsorption device until the acid gas adsorption device is cooled to a desired cooling temperature.
